Europäisches Patentamt

European Patent Office

Office européen des brevets

(19)

(11) Publication number: **0 272 015**
**A2**

(12) **EUROPEAN PATENT APPLICATION**

(21) Application number: **87310575.3**

(22) Date of filing: **01.12.87**

(51) Int. Cl.⁴: **B29C 47/54**

---

(30) Priority: **02.12.86 GB 8628730**

(43) Date of publication of application:
**22.06.88 Bulletin 88/25**

(84) Designated Contracting States:
**DE FR GB IT NL**

(71) Applicant: **NATIONAL RESEARCH DEVELOPMENT CORPORATION**
**101 Newington Causeway**
**London SE1 6BU(GB)**

(72) Inventor: **Mackley,Malcolm Robert**
**32 Chesterton Hall Crescent**
**Cambridge(GB)**
Inventor: **Solbai,Samad Bin Fac. of**
**Mechanical Engineering**
**Universiti Tekn. Malaysia**
**Jalan Gurney Kuala Lumpur 54100(MY)**
Inventor: **Anton,Christopher**
**47 Alexander Road, Llandudno**
**Gwynedd LL30 2DQ(GB)**

(74) Representative: **Smart, Peter John et al**
**W.H. BECK, GREENER & CO 7 Stone**
**Buildings Lincoln's Inn**
**London WC2A 3SZ(GB)**

---

(54) **Polymer forming process.**

(57) A process for the extrusion of orientable, thermoplastic polymer material such as ultra high molecular weight polyethylene comprises:

(i) forming a gel of a polymer material by crystallisation from a solution thereof in a solvent;

(ii) removing solvent from the gel to produce a polymer material containing not more than 5% by weight of solvent; and

(iii) extruding the solid polymer material through a die so as to orient the polymer material. The product may have a cross-sectional area of at least 10mm² and a Young's modulus of at least 15 GPa.

Fig 4

## POLYMER FORMING PROCESS

This invention relates to polymer forming processes; more particularly, this invention relates to polymer forming processes wherein an at least partially dried gel crystallised polymer material is oriented by extrusion through a die.

It is known that the properties, principally the mechanical properties such as strength and stiffness, of thermoplastic polymer materials may be enhanced in a given direction by orienting the polymer material in that direction. A major problem which besets accomplishing this property enhancement by deformation processes, such as tensile drawing, is the difficulty in attaining effective deformation of the polymer material, which difficulty is exacerbated as the average molecular weight of the polymer molecules is increased. It is believed that the long molecular chains of the polymer network are highly entangled and provide great resistance to the deformation; and that the effective deformability of the polymer material may be increased by reducing the number of molecular entanglements in the polymer network. One method of attaining higher effective deformability is by dissolving the polymer material in a solvent to form a solution and crystallising a gel therefrom prior to deforming the polymer material; see example, GB 2042414; GB 2051667; GB 2164603; EPA 55001; and EPA 77590. It is believed that the solvent action reduces the molecular entanglements in the polymer network.

While the reduction in the number of molecular entanglements in the polymer network is a principal factor in attaining high effective drawability, crystallisation from a solution containing too low a polymer concentration can give an undesirably low level of molecular entanglement resulting, on deformation, in mechanical properties which, while very good, are not optimised.

Processes are known in which property enhancement of polymer materials is effected by deformation in the solid phase: see, for example, GB 1311885; 1480479; and 2060469. In none of these processes, however, are significantly enhanced properties imparted to an ultrahigh molecular weight polymer.

EP - 0024810 describes a process of forming shaped articles comprising forming a free draining gel from a solution of a crystallisable, high molecular weight polymer under conditions which cause crystallisation of the polymer and subjecting the gel to a non-random deformation process so that the associated solvent is expressed. Some residual solvent may be present and can assist in subsequent fabrication processes but the solvent may also be completely removed for such processes. The resulting products have good physical properties, particularly in modulus after uniaxial or biaxial drawing.

The non-random deformation process employed is typically pressing between rollers to form an unoriented sheet which is subsequently drawn to form thin films or fibres of oriented material.

EP - 0141418 describes a process in which a crystallised gel is compressed between rollers as in EP - 0024810 and the compressed material is then drawn in two stages. In the first stage the material is drawn through a die at a modest draw ratio (eg. about 9) to form a round cross-section product of about 4mm diameter. To achieve good physical properties, this intermediate product is drawn over rollers to a diameter of about 1mm. At the commencement of the first stage of drawing, the polymer material has a solvent content of for instance 50% by weight. The bulk of this solvent is expressed from the entry side of the drawing die and the remainder may be evaporated in the second stage of drawing.

There remains a need for a process of forming polymer materials which is applicable to orienting high molecular weight polymers to form products having good physical properties which is not restricted to the production of thin films and fibres.

High molecular weight polymers such as polyethylene of weight average molecular weight in excess of $10^6$ cannot normally be extruded through a die by ram extrusion or hydrostatic extrusion. We have found that surprisingly, gel-crystallised high molecular weight polymers of low or zero solvent content can be extruded through a die.

Accordingly, the present invention provides a process for the extrusion of orientable, thermoplastic polymer material which process comprises:

(i) forming a gel of the polymer material by crystallisation from a solution thereof in a solvent;

(ii) removing solvent from the gel to produce a polymer material containing not more than 5% by weight of solvent; and

(iii) extruding the solid polymer material through a die so as to orient the polymer material.

In a second aspect, the invention includes an oriented thermoplastic polymer material extrusion having a cross-sectional area of at least 10mm$^2$ and a Young's modulus of at least 15 GPa, wherein the weight average molecular weight of the polymer material is at least $10^6$.

Polymer material supplied to the die may be in the form of for instance bar, strip, film (including laminates thereof), rod, multifilaments, and other cross-sections of solid stock and hollow workpieces. The term "hollow workpiece" includes tubes and other cross-sections of hollow stock. Examples include open-ended elongate workpieces of substantially constant cross-section, desirably with an axis of symmetry; for example, hollow workpieces of circular, elliptical, square, rectangular or triangular cross-section. The polymer material may be supplied as billets and other forms of stock of greater length; indeed, continuous stock, which may be formed as the process is performed, may be utilised.

The polymer material to be extruded is not heated to its melting point but is in the solid phase immediately prior to its entry into the die, i.e. is formstable in the absence of any impressed stress. Possibly, some local melting may occur in the die; for example, because of intense shearing of the polymer material on its deformation in the die.

The process of the present invention is applicable to any thermoplastic organic polymer material, preferably a crystallisable such polymer material. Examples include unsubstituted or mono-or poly-halo-, for example chloro-or fluoro-, substituted vinyl polymers such as polyvinyl chloride and polyvinylidene difluoride. Other examples include polyolefins, preferably linear polyolefins, polyalkylene oxides such as polyethylene oxide; polyacetals such as polyoxy-methylene and polyacetaldehyde-polyamides, preferably aliphatic polyamides; unsubstituted or hydroxy-substituted polyester such as PHB and polyethylene terephthalate; and polyetherketones.

Preferably, the polymer comprises a homopolymer of ethylene or propylene or a copolymer of either of these with at least one comonomer. It is particularly preferred that the polyolefin comprises polyethylene, especially linear polyethylene, polypropylene, a polyethylene-polypropylene copolymer or a blend comprising at least one polyolefin therefrom.

It is desirable, for example in order to obtain high tensile strength elongate, oriented thermoplastic polymer material, that the polymer material has a weight average molecular weight greater than 50,000 preferably greater than 750,000. It is particularly preferred that the polymer material, e.g. linear polyethylene, has a weight average molecular weight greater than 1,000,000.

The thermoplastic polymer material used in the process of this invention may be filled. Examples of useful fibrous, reinforcing fillers include glass, aramid (such as KEVLAR), asbestos, metal, carbon and ceramic whiskers, such as those formed from silicon carbide. Suitably the fibres may be from 0.1mm in length, preferably having an average length of from 1 to 5mm. Examples of useful laminar fillers include mica, talc and graphite flakes. Chalk and fly ash may also be included. The amount of filler which may advantageously be included depends on the nature of the filler, but up to 50% by weight, preferably less than 30%, especially less than 20%, may be incorporated.

It is usual to find poor adhesion and dispersion between a reinforcing filler and a polyolefin matrix. However, the addition of filler to the polymer in the solution and/or gel state greatly eases difficulties of achieving homogeneous dispersion experienced when mixing in the melt. Interfacial bonding between filler and polymer after extrusion also appears to be improved when mixing has taken place in the gel or solution state. Accordingly, it is desirable that the filler is incorporated in the solution of the polymer material.

The die used in the process of the present invention preferably has an exit side of smaller cross-section than the entry side in order to obtain orientation. Such a die is termed a reducing die; that is, the cross-sectional area of the die orifice normal to the machine direction at the entry side of the die is greater than that at the exit side. This does not necessarily mean that the perimeter of the die orifice normal to the machine direction at the exit side of the die is less than that at the entry side: in the case of hollow stock the workpiece may be expanded over a mandrel while being elongated and oriented.

In accordance with the process of the present invention, a solution and/or gel of the polymer material is formed. The solvent used should be chosen not to be too low boiling otherwise it may evaporate so rapidly from the polymer material during processing as to act, in effect, as a pneumatogen and thereby disrupt the structure of the elongate polymer material. A solvent which boils, at standard pressure, above 100°C, more preferably above 140°C, is satisfactory. On the other hand, the boiling point of the solvent should not be so high that it is difficult to remove it from the polymer material.

Halogenated and non-halogenated hydrocarbons are generally satisfactory solvents although polyolefins, such as linear polyolefins, are completely soluble in most of these solvents only at temperatures of at least 100°C. Suitable such solvents are, therefore, aliphatic, cycloaliphatic or aromatic hydrocarbons, preferably with boiling points above 100°C, especially above 140°C. Examples include the octanes, nonanes, decanes, higher straight or branched chain hydrocarbons, petroleum fractions with a boiling range above 100°C, toluene, xylenes, polycyclic aromatic hydrocarbons such as naphthalene and, hydrogenated derivatives thereof such as tetralin and decalin.

In accordance with a preferred feature of this invention, the solvent (a) for the polymer material is used as a fluid mixture, preferably a homogeneous mixture with a non-solvent (b) for the polymer material. Component (a) of the fluid mixture may be a single solvent or may itself be a mixture of solvents, including latent solvents, for the polymer material the nature of which will depend on the polymer material subjected thereto. Component (b) of the fluid mixture comprises one or more non-solvents for the polymer material the nature of which will depend again on the polymer material subjected thereto. (The term "non-solvent" means herein a substance which does not, per se, dissolve the polymer material but which will, in homogeneous admixture with one or more other substances which may also comprise a latent solvent, improve the solubility of the polymer material in one or more other substances.)

Suitably, component (a) has a solubility parameter from 2.5 cal$^{\frac{1}{2}}$ ml$^{-3/2}$ below to 1.0 cal$^{\frac{1}{2}}$ ml$^{-3/2}$ above the solubility parameter of the bulk polymer material. However, component (b) suitably has a solubility parameter more than 0.5 cal$^{\frac{1}{2}}$ ml$^{-3/2}$ outside the above-quoted range.

Examples of components (b) which are generally satisfactory for use with polyolefins such as linear polyethylene include organic hydroxyl compounds. Suitable such non-solvents include aliphatic or cycloaliphatic alcohols or phenols, preferably with boiling points above 100°C, especially above 140°C; for example, cyclohexanol.

The weight ratio of components (a):(b) may vary from greater than 1:0 to 1:9, preferably from greater than 1:0 to 1:1.

It is desirable that the polymer material is crystallised from the solvent at a temperature above the glass transition temperature (Tg) but below the Tm of the bulk polymer material. Typically the polymer material is subjected to the solvent or fluid mixture at a temperature of at least 100°C.

The concentration of the polymer material the solution and/or gel should be greater than the critical concentration (C*) for molecular entanglement to occur; typically, the concentration should be at least 0.1 w/v%; for example, from 0.1 to 10 w/v%, desirably 0.2 to 1.5 w/v% preferably about 0.5 w/v%.

After a solution and/or gel of the polymer material is formed it is then cooled, for example by quenching in air in order to recrystallise the polymer material with its molecules having a reduced level of molecular entanglement in comparison to melt crystallised material. In the case of linear polyethylene the solution and/or gel is desirably cooled below 100°C, preferably below 80°C, especially below 70°C.

The recrystallised polymer material is next at least partially dried. This may be effected by subjecting the polymer material to heating, for example, in a vacuum oven at a temperature of 50°C to 70°C or to a stream of gas at an elevated temperature (which temperature is not, however, sufficiently high to cause remelting of the crystalline gel), by centrifugation or by application of mechanical pressure to the polymer material. The subsequent deformation is found to be effective whether the polymer material is completely dried or contains as much as 5%($^w$/w) of solvent.

The at least partially dried polymer material is then preferably comminuted and then compacted either as it is fed to the die or into a preformed workpiece. On compaction, the polymer material undergoes some compressive strain hardening which can lead to high loads being necessary to effect deformation. This effect is consequent on the elimination of porosity and can be reduced by incorporating a liquid or solid processing aid, for example, corn oil.

The polymer material may be deformed by ram extrusion, hydrostatic extrusion, draw-assisted hydrostatic extrusion, or by draw-assisted ram extrusion. It is preferred to deform the workpiece at an elevated temperature, for example, from 70° to 140°C, preferably from 90° to 115°C, such as about 100 to 110°C. The deformation ratio used may be from 5 to 40$^\times$, preferably from 15 to 30$^\times$; for example, about 20$^\times$.

In general, the polymer material may be deformed by any of the processes disclosed in GB 1311885 or 1480479.

The invention will now be further described by reference to the accompanying drawings, in which:-

Figure 1 is a schematic cut away side elevation of an extrusion apparatus for use in the invention;

Figure 2 is a schematic elevation of test apparatus used in evaluating the products of the invention;

Figure 3 is a graph of load versus displacement of the form obtained using the apparatus of Figure 2;

Figure 4 is a graph of Young's modulus against extrusion deformation ratio (or draw ratio) of products of the invention;

Figure 5 is a graph of Young's modulus against extrusion temperature for products according to the invention; and

Figure 6 is a graph of Young's modulus against volume fraction of filler for products according to the invention.

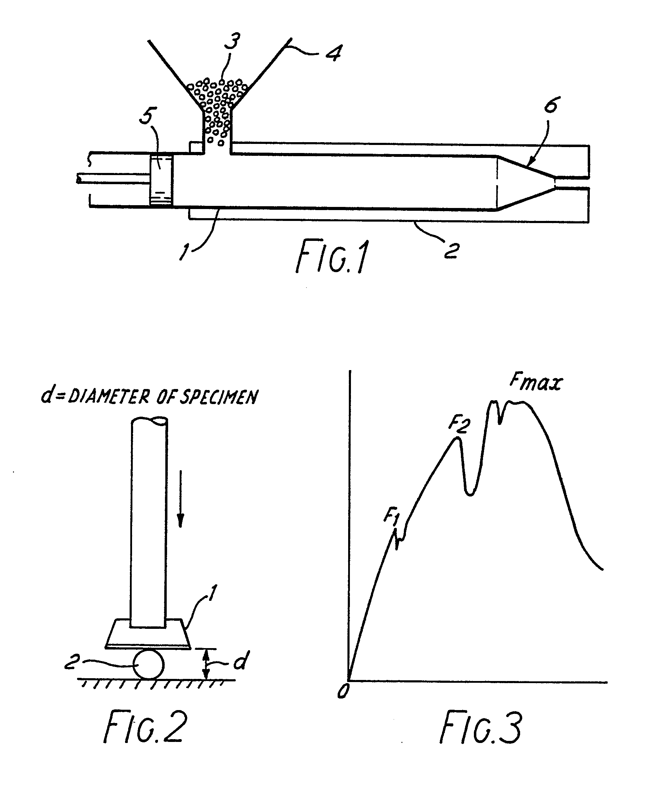

In Figure 1 of the accompanying drawings, an extruder barrel 1 bearing a circumferential battery of heaters 2 is fed with comminuted gel-crystallised polymer material 3 from a hopper 4. The barrel contains a slidably mounted drivable piston 5 and communicates in register with the entry side of a converging die 6.

In use, the comminuted gel-crystallised polymer material is conveyed into the barrel and is compacted by the piston. The polymer material urged by the piston against the die is extruded therethrough. The process may be made, in accordance with an important aspect of this invention, to run continuously by retracting the piston after a portion, for example a minor portion, of the workpiece has been extruded; and repeating the above mentioned compaction step.

The following Examples illustrate the invention.

## EXAMPLE 1

A 2 litre bath of decalin (decahydronaphthalene) was heated to 140°C in an oil bath. On reaching 80°C enough polyethylene (Hifax 1900 ex Mitsui $\overline{M}_w$ $10^6$) was added to the decalin to produce a 1.0w/v% solution. The bath was manually stirred at about 60 rpm in order to keep the added polyethylene in suspension until the onset of dissolution at about 105°C. The material was then maintained at 140°C for 30 minutes to ensure full dissolution before being quenched in air to ambient temperature. As the material cooled a gel of crystallities of polymer was formed. The gel was next dried mechanically by squeezing it through a gauze and it was possible to recover at least 75% by weight of the initial decalin at this stage. The dried material was fragmented in a mixer (Thermomix 2200) before being further dried in a vacuum oven at 70°C for several hours to give dried pellets containing about 0.5 $^w$/w%. (i.e. 99.95% of the original decalin was removed) of decalin. This dried material was then placed in the Davenport rheometer (barrel diameter 19.0 mm); lightly compacted; and allowed to heat to 100°C for 30 minutes. The material was next extruded at a speed of 0.6 cm/min through a circular converging die with an area reduction ratio of 20 and a semi-angle of 15°. Extrusion loads in excess of 60 kN were needed (the limits of the machine) to ram the material through the die. The extrudate had a smooth surface texture and was translucent.

## EXAMPLE 2

The gel was prepared and dried as in Example 1, but 1 ml of corn oil (a non solvent) was added to the dried material before insertion into the barrel of the rheometer. The corn oil acted as a lubricant in the extrusion process and, with the same extrusion speeds and temperature as in Example 1, a steady load of 30kN was needed to extrude the material through a die of the same reduction ratio.

## EXAMPLE 3

The gel was prepared and dried as in Example 1, but carbon fibre was chopped into lengths of about 2 cm and was added to the decalin bath immediately before the polyethylene was added. The carbon fibre comprised 2 v/v% of the polymer. The dried material was extruded under the same conditions as in the previous two examples and again an extrusion load in excess of 60 kN was needed.

## EXAMPLE 4

The gel was prepared and dried as in Example 1, but glass fibre (E glass ex Pilkington), chopped into lengths of about 2 mm was added to the decalin bath immediately before the polyethylene was added. Glass fibre contents of 15 v/v% and 30 v/v% of the polymer were employed. The dried material was extruded under the same conditions as in the previous Examples.

Table 1 shows the variation of certain important parameters.

TABLE 1

| Gel Concentration ($^W$/v%) | Filler | Effective Deformation Ratiq | Temp. (°C) | Extrusion Pressure (mPa) |
|---|---|---|---|---|
| 0.5 | none | 20 | 100 | 110 |
| 1.0 | none | 20 | 100 | 170 |
| 1.5 | none | 20 | 100 | >220 |
| 0.5 | none | 20 | 110 | 90 |
| 1.5 | none | 20 | 130 | 140 |
| 1.5 | none | 25 | 130 | >220 |
| 1.0 | 15v/v% glass | 15 | 100 | 170 |
| 1.0 | 15v/v% glass | 25 | 100 | >245 |
| 1.0 | 30v/v% glass | 15 | 100 | >220 |
| 1.0 | 30v/v% glass | 5 | 100 | >220 |
| 1.0 | 30v/v% glass | 5 | 130 | 86 |

The gel crystallised polymer of Example 1 was extruded through four different dies to achieve different deformation ratios. The variation of Young's modulus with extrusion deformation ratio for the unfilled products of Example 1 is shown in Table 2.

TABLE 2

| Effective Deformation Ratio (X) | Young's Modulus (GPa) |
|---|---|
| 5 | 8.0 |
| 15 | 13.6 |
| 20 | 19.8 |
| 25 | 23.6 |

The products of each of the preceding Examples were then subject to mechanical tests. The results are shown below.

## TOUGHNESS/HARDNESS - RAZOR BLADE TEST

A test method for measuring hardness and toughness was devised and is further described by reference to Figures 2 and 3 of the accompanying drawings.

In Figure 2, a razor blade 1 is mounted for vertical movement above a specimen 2 of circular cross-section.

In use, the blade is driven downward at a constant velocity of 5mm min⁻¹ into the specimen. A graph of load versus displacement (Figure 3) is obtained. This test gives a qualitative assessment of the hardness and toughness of each material. The results obtained were:

| Product of Example | F$_1$ | F$_2$ | Fmax | Area[4] |
|---|---|---|---|---|
| 1 | 79 | 124 | 130 | 21 |
| 2 | 73 | 119 | 132 | 23 |
| 3 | 85 | 130 | 145 | 30 |
| Control (Unoriented Hostalen GUR ex Hoechst) | – | – | 45 | 7 |

The load on the blade was measured in newtons and the area is, in each case, measured in the same arbitrary units. The initial peak F$_1$ records the onset of blade penetration into the specimen and is a measure of hardness, and the area is a measure of the toughness of the material. The results indicate that the carbon fibre filled material of Example 3 is both tougher and harder than the other two, but all three oriented specimens are considerably harder than the unoriented one.

## STIFFNESS - 3 POINT BENDING

The samples were tested in bending mode on a JJ tensile testing machine at a deformation rate of 2.4 mm/min with a specimen diameter of 4.3 mm and length of 65 mm. In each case the extrusion deformation ratio was 20. The results obtained were:

| Product of Example | Modulus (GPa) |
|---|---|
| 1 | 19.8 |
| 2 | 6.7 |
| 3 | 15.8 |

## EXAMPLE 5

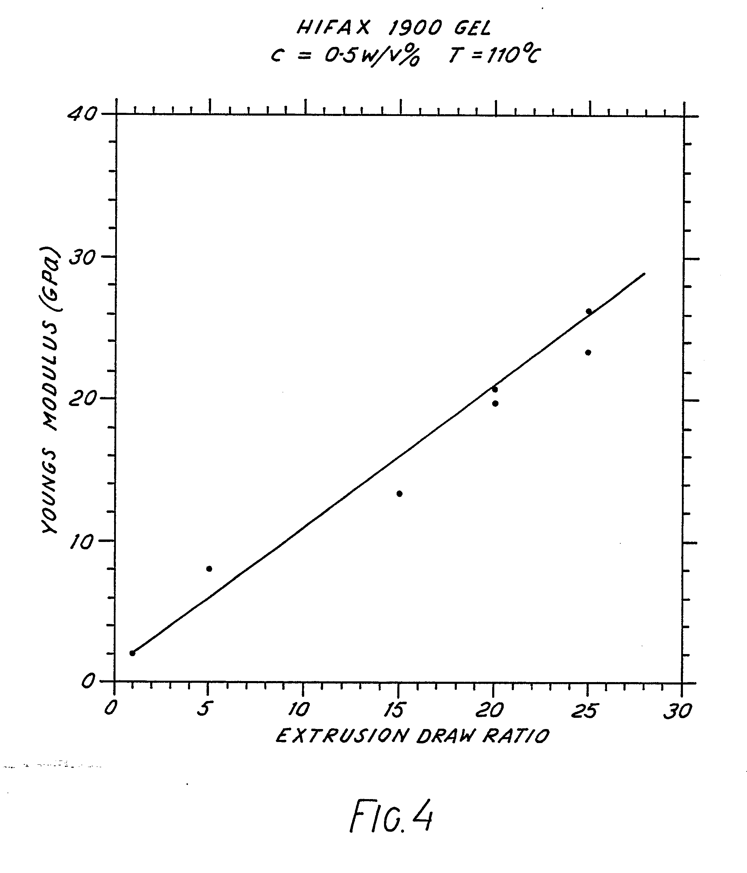

The gel-crystallisation process of Example 1 was repeated using a 0.5% w/v polymer solution. The dried polymer material was extruded at various extrusion temperatures, and at various effective deformation ratios. The varation in Young's modulus with extrusion deformation ratio is shown in Figure 4. It can be seen that Young's modulus increases linearly with increasing extrusion deformation ratio.

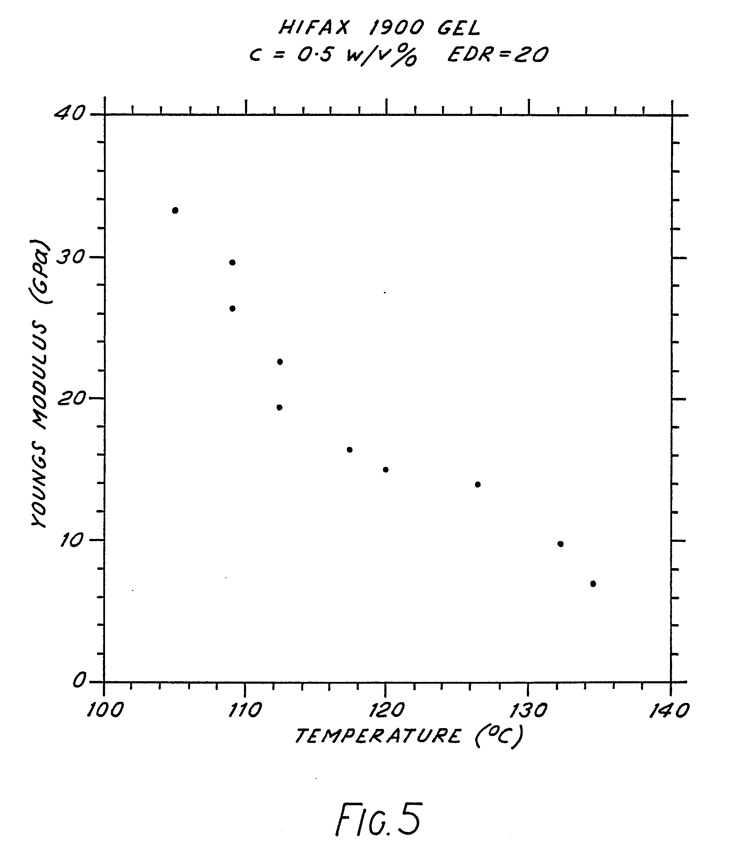

The variation of Young's modulus with extrusion temperature is shown in Figure 5. It can be seen that the extrusion temperature is desirably kept low, eg. below 115°C. However, lower extrusion temperatures do imply higher extrusion pressures.

## EXAMPLE 6

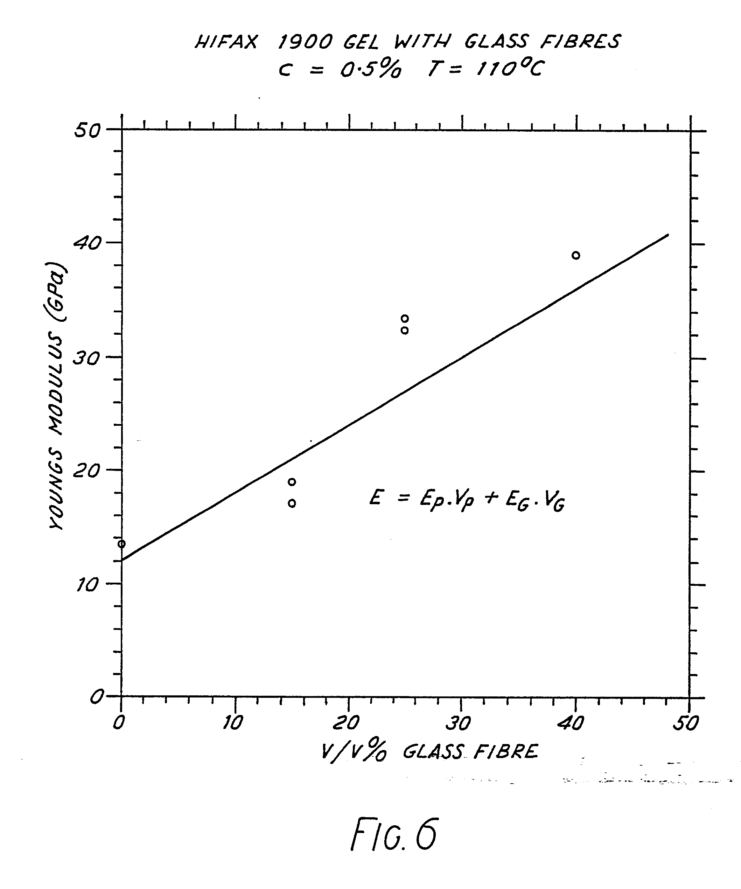

Example 5 was repeated including various amounts of chopped glass fibre (as in Example 4) in the solution of polymer. The dried polymer material was extruded to a deformation ratio of 20. The variation in Young's modulus with glass fibre loading is illustrated in Figure 6.

In accordance with the process of this invention it is, for the first time, possible, with orientable polymer materials of high weight average molecular weight (typically in excess of 500,000), to elongate the optionally filled polymer material, optionally in a continuous manner, to produce oriented material which may suitably be of substantial cross-section.

7

Because the polymer material is extruded well below its melting point and containing little residual solvent, accurate reproduction of die profile and size may be expected.

In many polymerisation processes, the polymer is produced initially in solution and the solvent is flashed off to yield the solid polymer which is then further processed. Advantageously, the present invention is practised using the solution of polymer obtained as the immediate product of a polymerisation process, with removal of some solvent or addition of extra solvent if need be to achieve the appropriate concentration of polymer for gel formation.

## Claims

1. A process for the extrusion of orientable, thermoplastic polymer material which process comprises:
(i) forming a gel of a polymer material by crystallisation from a solution thereof in a solvent;
(ii) removing solvent from the gel to produce a polymer material containing not more than 5% by weight of solvent; and
(iii) extruding the solid polymer material through a die so as to orient the polymer material.

2. A process according to Claim 1 wherein the polymer comprises a polyolefin or an unsubstituted or halo-substituted vinyl polymer.

3. A process according to Claim 2, wherein the polymer comprises polyethylene or polypropylene or copolymer of ethylene or propylene with at least one comonomer, a polyethylene-polypropylene copolymer, or a polyolefin blend comprising two or more thereof.

4. A process according to any preceding claim, wherein the polymer has a weight average molecular weight greater than 1,000,000.

5. A process according to any preceding claim, wherein the polymer is filled.

6. A process according to any preceding claim, wherein the die has an entry side and an exit side smaller in cross sectional area than said entry side.

7. A process according to any preceding claim, wherein the concentration of the polymer material in the solution is from 0.2 to 1.5w/v%.

8. A process according to any preceding claim, wherein the polymer material is comminuted after said crystallisation.

9. A process according to any preceding claim, wherein the extrusion is effected by ram extrusion or by hydrostatic extrusion.

10. A process according to any preceding claim, wherein polymer material is extruded with a deformation ratio of from 5 to 40.

11. A process as claimed in any preceding claim, wherein said polymer material for extrusion is fed continuously to said die.

12. A process for the production of an oriented plastics material by the passage of at least partially dried, gel crystallised, orientable, thermoplastic polymer material through a die characterised in that the solvent content of the polymer material is no more than 5% by weight and in that the solid polymer material is extruded through said die.

13. An oriented thermoplastic polymer material extrusion having a cross-sectional area of at least 10 mm$^2$ and a Young's modulus of at least 15 GPa, wherein the weight average molecular weight of the polymer material is at least 10$^6$.

**FIG.1**

**d = DIAMETER OF SPECIMEN**

**FIG.2**

$F_{max}$

$F_2$

$F_1$

$0$

**FIG.3**

HIFAX 1900 GEL
C = 0·5 w/v%   T = 110°C

FIG. 4

HIFAX 1900 GEL
C = 0·5 w/v%   EDR = 20

FIG.5

HIFAX 1900 GEL WITH GLASS FIBRES
C = 0·5%   T = 110°C

$$E = E_P.V_P + E_G.V_G$$

FIG. 6